(19) Europäisches Patentamt / European Patent Office / Office européen des brevets

(11) **EP 2 207 107 A1**

(12) **DEMANDE DE BREVET EUROPEEN**

(43) Date de publication:
**14.07.2010 Bulletin 2010/28**

(51) Int Cl.:
***G06F 17/30*** *(2006.01)*

(21) Numéro de dépôt: **09180536.6**

(22) Date de dépôt: **23.12.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **30.12.2008 FR 0807488**

(71) Demandeur: **Thales**
**92200 Neuilly Sur Seine (FR)**

(72) Inventeurs:
• **Benhadda, Hamid**
  **92700, Colombes (FR)**
• **Gouttas, Catherine**
  **92700, Colombes (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(54) **Procédé et système optimisé de gestion des noms propres pour l'optimisation de la gestion et de l'interrogation des bases de données**

(57) Procédé et système optimisés permettant de gérer des entités nommées ou des noms propres se présentant sous une forme graphique ou syntaxique différente contenues dans une base de données (3), **caractérisé en ce qu**'il comporte en combinaison la mise en oeuvre de la méthode de Levenshtein en utilisant une mesure de similarité de la méthode de Levenshtein et de la méthode des N-Grams afin de trouver une entité canonique pouvant remplacer un ensemble d'entités nommées dans une base de données.

FIG.1

**Description**

L'objet de la présente invention concerne un procédé optimisé de gestion des noms propres ou entités nommées pour l'optimisation de la gestion et de l'interrogation des bases de données et de bases de connaissances. Elle repose notamment sur une automatisation du procédé d'appariement de variantes graphiques et de variantes syntaxiques de noms propres ou d'entités nommées qui se réfèrent à un nom ou à une entité unique.

Le procédé conduit à une modification du contenu de la base de données permettant une recherche plus rapide dans une base ou à une gestion optimisée de cette même base de données.

Il est ainsi utilisé pour améliorer et accélérer les processus d'alimentation et de gestion des bases de données ou bases de connaissances, ainsi que les processus de recherche d'information.

Dans le domaine de la gestion des données ou des connaissances, pour alimenter les bases l'art antérieur utilise des outils d'extraction d'information appliqués à de larges collections de textes qui permettent d'identifier des entités nommées de différents types : noms de personnes, noms d'organisations, noms de lieux, adresses, etc.

Ces entités sont soumises à une variabilité graphique et syntagmatique très importante - du fait d'erreurs typographiques ou orthographiques, du fait de problèmes de translittération et de transcription, du fait aussi de processus de transformation syntagmatique (réduction/extension), ordre des mots, siglaison, etc. Si le processus d'extraction d'entités nommées est aujourd'hui assez bien maîtrisé, le processus d'appariement l'est moins et la tâche d'appariement est effectuée manuellement.

Ainsi, en sortie du processus d'extraction d'entités nommées, on aura pour une entité de type Personne, par exemple dans le cas d'un individu nommé « Laurent Gbagbo », une liste de variantes très importante du point de vue quantitatif parmi lesquelles {Laurent Gbagbo, Laurent Gbagbo, L.Gbagbo, L.Gbagbo, ..}. Ces variantes renvoient à la même personne et doivent être très appariées pour être stockées dans la base de connaissances, ceci en vue d'assurer la cohérence des connaissances. De la même manière dans les bases de données Personne, les individus sont souvent stockés sur plusieurs enregistrements d'une base de données du fait d'erreurs commises lors de la saisie sur leur nom, leur adresse, etc.... Ainsi, l'expression « Laurent Gbagbo » pourra être considérée comme entité canonique de l'ensemble des variantes listées précédemment.

La problématique de l'appariement des entités nommées ou noms de personnes est très largement abordée dans la littérature. Les méthodes proposées, à la connaissance du Demandeur, s'appuient principalement sur les méthodes précitées de calcul de la distance de Levenshtein, de phonémisation ou de calcul des similarités séparément (sans combinaisons de ces techniques).

La méthode de Levenshtein utilisée seule reste peu exploitable ne donnant pas de résultats probants. La phonémisation produit de bons résultats pour l'appariement d'entités, toutefois, elle reste dépendante de la langue et impose l'intervention d'experts pour développer et maintenir les règles du dispositif de phonémisation ou phonémiseur. Les calculs de similarité ou de distance produisent de bons résultats, qui restent néanmoins dépendants de la façon dont sont traitées les entités nommées (bi-grams seuls, tri-grams seuls, etc.). L'un des objectifs de la présente demande de brevet est d'optimiser les résultats obtenus par la combinaison des méthodes précitées.

Le procédé selon l'invention repose, notamment, sur une utilisation conjointe de méthodes linguistiques et de méthodes mathématiques, notamment, d'une mesure de similarité qui repose sur la distance de Levenshtein qui mesure la similarité entre deux chaînes de caractères, de la méthode des N-Grams, correspondant à une sous-séquence de n éléments construite à partir d'une séquence donnée, de l'analyse relationnelle et de la similarité régularisée. Ces différentes méthodes sont connues de l'Homme du métier et seuls les rappels nécessaires à la compréhension de l'invention seront donnés dans la présente demande de brevet.

L'invention concerne un procédé permettant de gérer des entités nommées se présentant sous différentes formes graphiques ou syntaxiques et référant à la même entité contenues dans une base de données, **caractérisé en ce qu**'il comporte au moins les étapes suivantes :

- appliquer une méthode de Levenshtein sur lesdites entités $E_i$ dans la base de données afin de créer une similarité entre lesdites entités, définir la mesure de similarité entre deux entités de la manière suivante

$$S_l(E_i, E_j) = 1 - \frac{D(E_i, E_j)}{\max(|E_i|, |E_j|)}$$

avec $S_l$, la mesure de similarité entre les deux entités $(E_i, E_j)$ de la base de données, D la distance de Levenshtein entre les deux entités, $|E_i|$ respectivement $|E_j|$ le nombre de caractères de $E_i$ respectivement $E_j$

- utiliser la méthode de n-grams pour créer une similarité $S_n(E_i, E_j)$ entre les A entités constituant la base de données, en extrayant des deux entités $E_i$ et $E_j$ les ensembles $N_i$ des n-grams de $E_i$ et l'ensemble $N_j$ des n-grams de $E_j$, définir ensuite le nombre de n-grams $|N_i|$ déduits de $E_i$ et le nombre de n-grams $|N_j|$ déduits de $E_j$, la similarité entre $E_1$ et $E_j$ est alors définie par :

$$S_n(E_i, E_j) = \frac{|N_i \cap N_j|}{\min(|N_i|, |N_j|)}.$$

- utiliser une méthode de fusion des données sur lesdites entités de la base de données afin de construire au moins 2 classifications, relatives respectivement à la similarité n-grams avec n supérieur ou égal à 2, lesdites classifications correspondant à des ensembles de classes d'entités $P_i$,
- trouver la partition consensus $P_c$ entre les M partitions trouvées, utiliser l'entité de forme canonique $E_c$ pour visualiser le résultat ou encore modifier les entités présentes dans la base de données par l'entité de forme canonique.

Le procédé de fusion mis en oeuvre peut être la méthode d'analyse relationnelle.

Lors de l'étape d'analyse relationnelle, le procédé pour accomplir l'étape d'analyse relationnelle pour trouver la partition consensus entre les partitions déterminées utilise, par exemple, la similarité régularisée pour pondérer différemment le poids de chaque partition, dans le calcul de la similarité globale déduite des trois partitions en exécutant les étapes suivantes

on commence par calculer la densité $\delta_i$ de chaque partition $P_i$, cette densité est une mesure du pouvoir d'agrégation de la partition considérée et est définie par la relation :

$$\delta_i = \frac{\sum_{k=1}^{\kappa} n_{ik}^2}{nb\_entites^2}$$

où $\kappa$ est le nombre de classes de la partition $P_i$, $n_{ik}$ le nombre d'entités de la partition $k$ et $nb\_entites$ est le nombre d'entités présentes dans la base,

En notant $\Delta = \sum_{i=1}^{3} \delta_i$, alors le poids $\Pi_i$ de la partition $P_i$ sera : $\Pi_i = 0.5 \times \left(1 - \frac{\delta_i}{\Delta}\right)$.

Le procédé peut comporter une étape d'émission d'une requête d'un utilisateur pour trouver les entités canoniques dans une base de données et effectuer le remplacement desdites entités par l'entité canonique trouvée.

L'invention concerne aussi un système permettant de gérer des entités nommées se présentant sous différentes formes graphiques ou syntaxiques et référant à la même entité contenues dans une base de données dans lequel le procédé va exécuter différentes actions physiques au niveau de la base de données pour optimiser la qualité de la base de données et par suite en obtenir une meilleure gestion **caractérisé en ce qu'**il comporte au moins les éléments suivants :

- un processeur adapté à exécuter les différentes étapes du procédé selon l'invention,
- une base de données non structurées, cette base peut contenir des textes
- une mémoire tampon permettant le stockage de toutes les données dont il faut réaliser l'appariement.

Le système peut aussi comporter un dispositif de prise de décision suite à une requête formulée par un utilisateur.

Le système peut aussi comporter une interface homme machine permettant l'affichage des résultats de classification du procédé présentant au moins une des caractéristiques précitées et l'intervention d'un opérateur pour modifier la base de données initiale en remplaçant les entités présentes dans la base de données par l'entité de forme canonique.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1, un exemple de système permettant la mise en oeuvre du procédé selon l'invention,
- La figure 2, un synoptique des différentes étapes mises en oeuvre par le procédé selon l'invention,
- La figure 3, un exemple d'utilisation du procédé après une requête émise par un utilisateur, et
- La figure 4 un exemple dans le cas d'une entité nommée « Pierre Alchantel ».

Afin de mieux faire comprendre le procédé selon l'invention, le premier exemple donné est en relation avec la gestion d'une base de données contenant une collection de données non structurées.

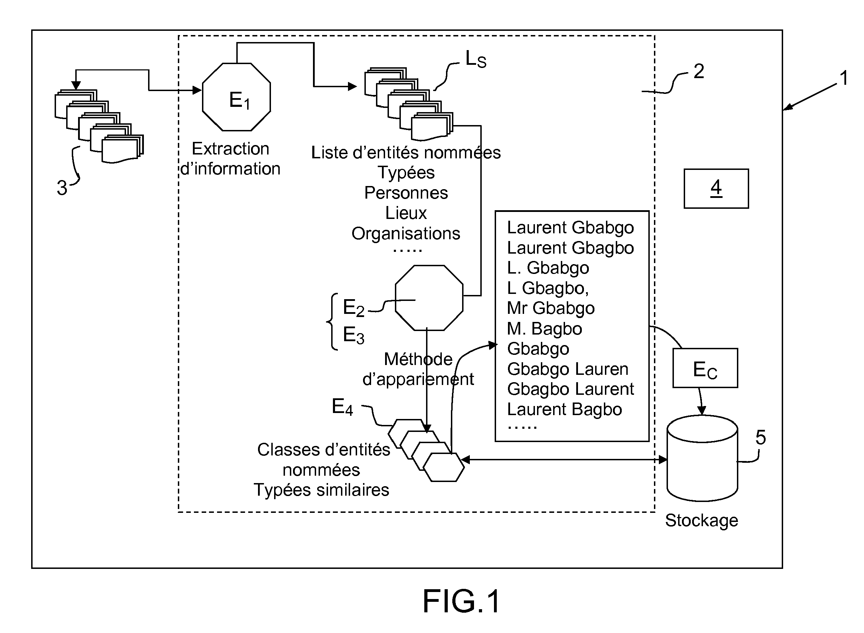

La figure 1 représente un exemple de système dans lequel le procédé va exécuter différentes actions physiques au niveau de la base de données pour optimiser la qualité de la base de données et par suite en obtenir une meilleure gestion. Le système 1 comporte un processeur 2 adapté à exécuter les différentes étapes du procédé selon l'invention, une base de données non structurées 3 qui peut contenir des textes, une mémoire tampon 4 qui va permettre le stockage de toutes les données dont il faut réaliser l'appariement et éventuellement une base de données de stockage 5 dans le cas où les données canoniques remplaçant les données de base ne sont pas stockées dans la base de données initiale. Il va donc résulter de ce traitement des interactions physiques avec les bases de données, notamment dans le cas de remplacement d'une donnée par une autre donnée.

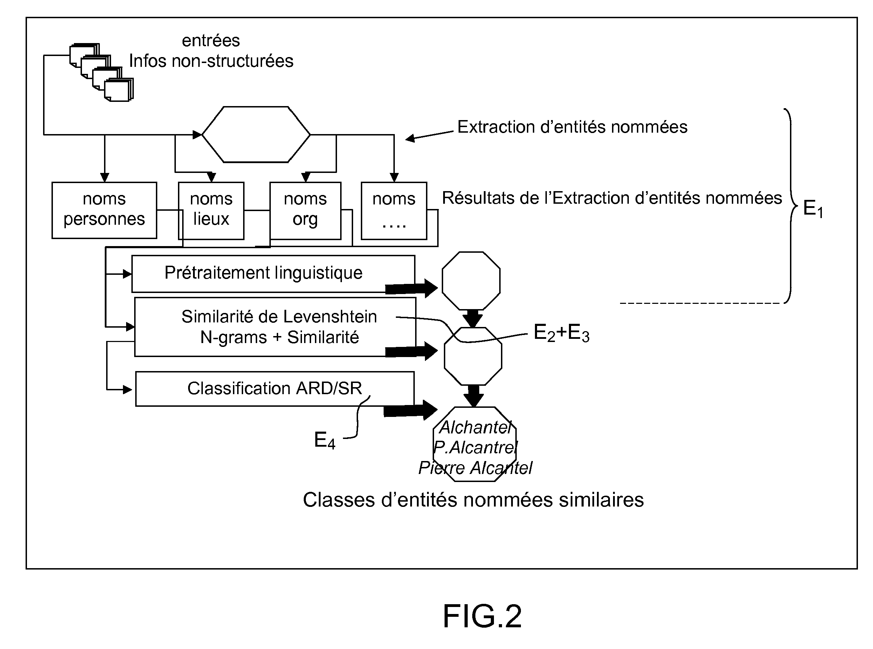

Les étapes mises en oeuvre par l'invention sont représentées aux figures 1 et 2. La première étape E1 consiste à extraire de la collection de données non structurées 3 par un mécanisme d'extraction d'information connu de l'Homme du métier, une liste de données constituées d'une liste d'entités nommées typées sémantiquement Ls, telles que des noms de personnes, de lieux, d'organisations. Ces dernières pourront être stockées temporairement dans la mémoire tampon 4 qui va être utilisée pour stocker les données en cours de traitement dans le cas où la mémoire de travail du processeur est insuffisante. Cette première étape E1 peut consister en une étape de pré-traitement et d'application de règles linguistiques de transformation des données. Ces prétraitements sont connus de l'Homme du métier et ne seront pas explicités. Par exemple, dans une entité nommée de type Organisation, on ramènera les formes Ltd à la forme Limited, Corp à la forme Corporation, ceci en vue d'aider à l'appariement d'entités telles que XXX limited, XXX Ltd. Ces règles de prétraitement sont de deux types : certaines sont indépendantes des catégories d'entités de la base de données considérée (passage en typographie pauvre, suppression de signes de ponctuation, etc ...) ; d'autres sont dépendantes des catégories d'entités de la base de données considérée. Les règles de transformation sont simples et évolutives ; elles ne requièrent pas de connaissances linguistiques avancées.

La liste d'entités ainsi pré-traitée va être mise dans la mémoire tampon 4, et le procédé va mettre en oeuvre la méthode d'appariement selon l'invention sur cette liste. Pour cela, le procédé va exécuter une étape E2 de similarité en appliquant la méthode de distance de Levenshtein détaillée ci-après sur les données qui se présentent sous la forme d'une liste de N lignes, N étant le nombre d'objets ou d'entités à apparier. En sortie de l'étape E2, on dispose d'une matrice comprenant A lignes et A colonnes, les éléments Ei de cette matrice ou tableau correspondant à une valeur de similarité ente deux objets.

La troisième étape E3 consiste à appliquer la méthode des N-Grams sur les sorties de E2 puis à mesurer la similarité entre les éléments ou entités nommées à apparier.

Une quatrième étape E4 va utiliser une méthode de fusion, prenant en compte toutes les matrices de similarités précédemment calculées. On utilisera, par exemple, l'analyse relationnelle pour faire cette fusion. Le but de l'analyse relationnelle est, notamment de déterminer, dans la base de données étudiée, des classes d'entités nommées, telles que chaque classe est constituée de toutes les graphies d'une même entité. Ces classes étant relatives aux similarités définies par la méthode de la distance de Levenshtein et de la méthode des N-Grams. Les C classifications, où C est le nombre de mesures de similarités différentes utilisées, donneront C partitions. Le procédé utilise une nouvelle fois l'analyse relationnelle pour trouver la partition consensus entre les C précédentes classifications, celle qui sera la plus proche des C partitions trouvées précédemment.

L'exemple détaillé qui suit, va permettre d'expliciter de manière plus concrète le procédé selon l'invention. Il sera donné dans le cadre non limitatif d'utilisation de la méthode de Levenshtein et des N-grams pour les 2-grams et 3-grams.

Une autre fonction de l'analyse relationnelle est, notamment, de considérer m entités $E_i$ appartenant à une même classe Ci et rechercher l'entité représentante. Dans le cadre d'un processus automatique, c'est cette entité représentante qui va être mémorisée dans une base de données, c'est-à-dire que les entités initialement présentes dans une base de données seront remplacées par leur forme canonique qui est l'entité Ei trouvée après le consensus. Dans le cadre d'un processus semi-automatique, c'est l'utilisateur qui choisira la forme canonique représentante. Ainsi les données non classifiées initialement vont être remplacées par une seule forme, qui sera considérée comme la forme canonique pour toutes les entités)

L'algorithme utilisé par le procédé selon l'invention et se déroulant sur le processeur se compose au moins des trois parties suivantes:

Etape 1

Utilisation d'un prétraitement linguistique

Etape 2

Utilisation et transformation de la distance de Levenshtein pour créer une similarité. Cette transformation est fondamentale, puisque la distance de Levenshtein n'est pas normée. En effet si, $D(E_1,E_2)$ est la distance de Levenshtein entre les deux entités $E_1$ et $E_2$, et si l'on note $|E_1|$ respectivement $|E_2|$ le nombre de caractères de $E_1$ respectivement $E_2$, la seule information que l'on possède sur $D(E_1,E_2)$ est : $0 \leq D(E_1,E_2) \leq \max(|E_1|,|E_2|)$. A partir de cette relation, on peut définir une mesure de similarité $S_l(E_1,E_2)$ entre les deux entités, telle que $0 \leq S_l(E_1,E_2) \leq 1$, par la relation :

$$S_l(E_1,E_2) = 1 - \frac{D(E_1,E_2)}{\max(|E_1|,|E_2|)}$$

Utilisation des n-grams (en particulier les 2-grams et 3-grams) pour créer une similarité $S_n(E_1,E_2)$ entre entités. Pour définir cette similarité on extrait des deux entités $E_1$ et $E_2$ les ensembles $N_1$ des n-grams de $E_1$ et l'ensemble $N_2$ des n-grams de $E_2$, on définit ensuite le nombre de n-grams $|N_1|$ déduits de $E_1$ et le nombre de n-grams $|N_2|$ déduits de $E_2$. La similarité entre $E_1$ et $E_2$ est alors définie par : $S_n(E_1,E_2) = \dfrac{|N_1 \cap N_2|}{\min(|N_1|,|N_2|)}$ . Où $|N_1 \cap N_2|$ est le nombre de n-grams communs aux deux ensembles $N_1$ et $N_2$.

<u>Etape 3</u>

On construit ensuite, en utilisant la théorie de l'analyse relationnelle, trois classifications, pour l'ensemble des entités présentes dans la base de données étudiée, relatives aux trois similarités définies ci-dessus (la similarité pour les 2-grams, la similarité pour les 3-grams et la similarité déduite de la distance de Levenshtein). Ces trois classifications donneront donc trois partitions (trois ensembles de classes d'entités) $P_i$ ($i$ = 1,2,3).

Il s'agira ensuite d'utiliser l'analyse relationnelle pour trouver la partition consensus $P_c$ entre les trois précédentes partitions (celle qui sera la plus proche des trois partitions).

Pour accomplir l'étape d'analyse relationnelle pour trouver la partition consensus entre les trois précédentes partitions, on va utiliser la similarité régularisée pour pondérer différemment le poids de chaque partition, dans le calcul de la similarité globale déduite des trois partitions. A cet effet, on commence par calculer la densité $\delta_i$ de chaque partition $P_i$. Cette densité est une mesure du pouvoir d'agrégation de la partition considérée. Elle est définie par la relation :

$$\delta_i = \frac{\sum_{k=1}^{\kappa} n_{ik}^2}{nb\_entites^2}$$

où $\kappa$ est le nombre de classes de la partition $P_i$, $n_{ik}$ est le nombre d'entités nommées dans la classe $k$ de la partition $P_i$ et $nb\_entites$ est le nombre d'entités présentes dans la base. Si on note $\Delta = \sum_{i=1}^{3} \delta_i$ , alors

le poids $\Pi_i$ de la partition $P_i$ sera: $\Pi_i = 0.5 \times \left(1 - \dfrac{\delta_i}{\Delta}\right)$ . Plus la densité d'une partition sera grande, moins elle aura d'importance dans le calcul de la similarité globale.

Une autre méthode consiste à calculer la similarité $S(E_i,E_j)$ pour deux entités nommées $E_i$ et $E_j$, comme combinaison de différentes similarités de la façon suivante :

$$S(E_i,E_j) = w_1 S_L(E_i,E_j) + w_2 S_n^2(E_i,E_j) + w_3 S_n^3(E_i,E_j) + \cdots + w_k S_n^k(E_i,E_j)$$

où :

- $S_L(E_i,E_j)$ est la similarité de Levenshtein et $S_n^2(E_i,E_j), S_n^3(E_i,E_j), \ldots, S_n^k(E_i,E_j)$ sont les similarités 2-grams, 3-grams, ..., etc.
- $w_1, w_2, w_3, \cdots, w_k$ sont des poids appliqués aux différentes similarités

On aura finalement une seule matrice de similarité à laquelle on appliquera l'analyse relationnelle pour obtenir une partition de la base. L'analyse relationnelle dans cette optique ne sera appliquée qu'une seule fois, contrairement à la méthode proposée où elle est appliquée plusieurs fois (autant de fois que de similarités utilisées et une dernière fois pour la fusion des différentes partitions obtenues).

*La « partition consensus »* est la partition qui sera la plus proche des partitions obtenues à l'étape 3. Par exemple, si on utilise la similarité de Levenshtein + la similarité 2-grams + la similarité 3-grams, on aura, après la première utilisation de l'analyse relationnelle à chacune des matrices de similarité, trois partitions. Supposons que l'on ait, pour deux entités nommées $E_i$ et $E_j$ les résultats suivants :

- $E_i$ et $E_j$ sont dans la même classe de la partition obtenue par la similarité de Levenshtein,
- $E_i$ et $E_j$ sont dans la même classe de la partition obtenue par la similarité de 2-grams, mais
- $E_i$ et $E_j$ ne sont pas dans la même classe de la partition obtenue par la similarité de 3-grams,

Alors, ces deux entités nommées seront dans la même classe de la « partition consensus » finale car elles étaient ensembles pour 2/3 des partitions (cela rejoint la théorie des votes qui est à la base de l'analyse relationnelle). Ceci répond aussi à la signification de *« classification la plus proche »* c'est tout simplement la classification compromis entre les différentes classifications obtenues dans le sens que nous venons d'expliciter.

*La similarité globale* à ce stade est la somme des trois similarités (pondérées grâce à la similarité régularisée par des poids). Le terme « global » signifie simplement que l'on passe de similarités individuelles à une « similarité combinaison» des différentes similarités.

*La similarité régularisée* est une méthode de calcul de similarité entre les objets d'une base de données, capable de donner de façon automatique, des poids plus ou moins important à certaines variables mesurées sur les objets de la base.

La suite décrit comment utiliser l'analyse relationnelle pour obtenir cette partition consensus :

$$ s_{ij}^{k} = \begin{cases} 1 & si\left(E_i, E_j\right) sont\ dans\ la\ même\ classe\ de\ la\ partition\ k \\ 0 & autrement \end{cases} $$

Si $\kappa$ est le nombre de partitions obtenues au premier stade (classification de chacune des similarités utilisées individuellement), la similarité globale $s_{ij}$, entre deux entités nommées $E_i$ et $E_j$ sera alors :

$$ s_{ij} = \sum_{k=1}^{\kappa} w_k s_{ij}^{k} $$

C'est sur cette similarité que l'analyse relationnelle sera appliquée pour la seconde fois pour trouver la partition consensus. Si $\rho$ est le nombre de classes d'une partition donnée $P_i$ et *nb_entites* le nombre total d'entités nommées dans la base, alors la relation entre $n_{ik}$ **et** *nb_entites* est :

$$ nb\_entites = \sum_{k=1}^{\rho} n_{ik} $$

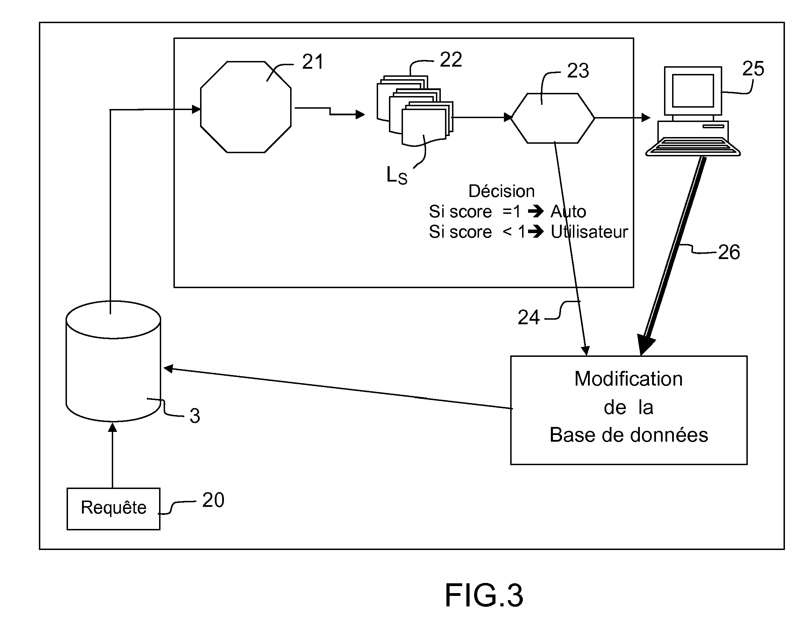

La figure 3 schématise un exemple d'utilisation du système et du procédé selon l'invention, par un utilisateur représenté sur la figure par une requête 20 qu'il émet vers une base de données 3 contenant, par exemple, des noms de personne, de lieux ou d'organisations, ou un ensemble de ces entités. L'utilisateur va par exemple émettre une requête 'recherche' sur un nom de personne, un lieu, une adresse, etc., cette requête émise sur la base de données à gérer va mettre en oeuvre le procédé selon l'invention. Le processeur déclenche une étape 21 permettant la recherche des formes proches ou méthode d'appariement telle que celle détaillée aux figures 1 et 2. L'ensemble des classes des formes proches détectées 22 va être transmis à un dispositif 23 de prise de décision. Cette prise de décision peut être automatique, 24, si dans les classes trouvées la similarité des entités appartenant à la classe est de 1. A l'inverse si dans les classes trouvées la similarité est inférieure à 1, la prise de décision fait intervenir l'utilisateur, par l'intermédiaire d'une interface Homme-machine 25, c'est l'utilisateur 26 qui va commander la modification dans la base de données.

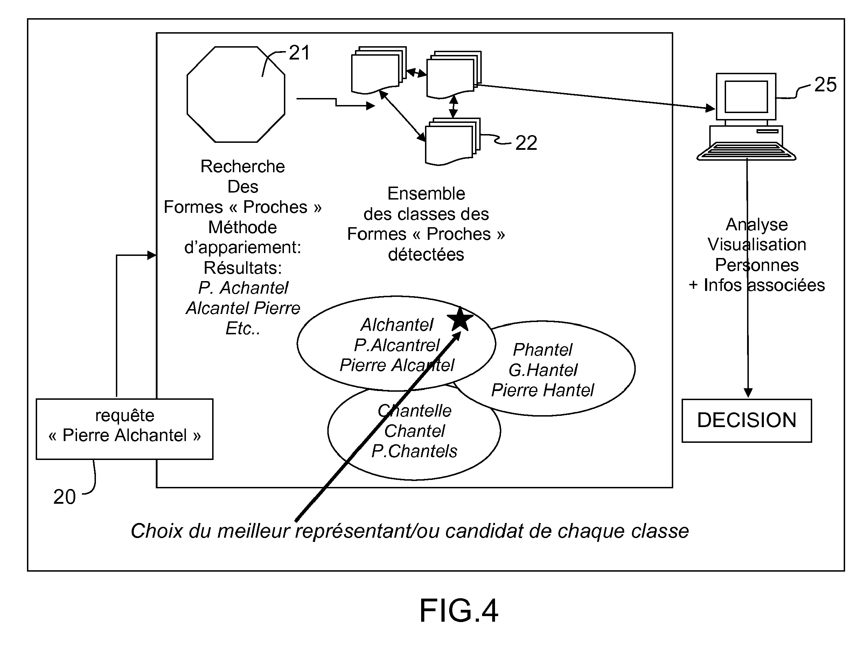

La figure 4 représente la mise en oeuvre du système de la figure 3 dans le cas précis d'une entité nommée « Pierre Alchantel ». Sur requête d'un opérateur, le procédé selon l'invention va effectuer une recherches des formes propres en mettant en oeuvre le procédé selon l'invention. Il va obtenir l'ensemble des classes des formes « proches détectées ». L'analyse et la visualisation des personnes et des informations associées vont être affichées sur un écran 25 afin que l'opérateur puisse prendre une décision.

Dans le cadre d'une application à la gestion d'identification dans les entreprises, d'individus, le procédé selon l'invention permet de mettre en oeuvre des processus de « nettoyage » ou cleaning des bases de données.

Pour des applications de gestion d'identification de personnes au sein d'une base de données entreprise, le procédé permettra d'identifier un ensemble d'enregistrement qui renvoient à une entreprise à l'aide d'un seul représentant.

D'autre part, le procédé selon l'invention permet à un instant donné d'effectuer des opérations de nettoyage ou « cleaning » des bases de données (suppression de faux doublons) qui permettront elles-mêmes de fusionner les informations, associées aux faux doublons.

Le procédé offre aussi des processus d'appariement automatique (sans intervention de l'administrateur de la base de données ou de la base de connaissances).

Le procédé selon l'invention va s'appliquer dans de nombreux domaines tels que l'appariement de noms propres, tels que des noms d'organisations, des noms de lieux, l'appariement d'entités nommées coréférentes, l'interrogation de bases de données, la gestion de données et de base de données, la gestion de connaissance et de bases de connaissances, la gestion de l'identification, la recherche de similarités entre entités nommées, entre noms propres, la fusion de données, le traitement automatique de langage naturel.

## Revendications

1. Procédé permettant de gérer des entités nommées se présentant sous différentes formes graphiques ou syntaxiques et référant à la même entité contenues dans une base de données (3), **caractérisé en ce qu'**il comporte au moins les étapes suivantes :

   • appliquer une méthode de Levenshtein sur lesdites entités $E_i$ dans la base de données afin de créer une similarité entre lesdites entités, définir la mesure de similarité entre deux entités de la manière suivante

$$S_l\left(E_i, E_j\right) = 1 - \frac{D\left(E_i, E_j\right)}{\max\left(\left|E_i\right|, \left|E_j\right|\right)}$$

   avec $S_l$, la mesure de similarité entre les deux entités $(E_i, E_j)$ de la base de données, D la distance de Levenshtein entre les deux entités,
   $|E_i|$ respectivement $|E_j|$ le nombre de caractères de $E_i$ respectivement $E_j$
   • utiliser la méthode de n-grams pour créer une similarité $S_n$ $(E_i, E_j)$ entre les A entités constituant la base de données,
   en extrayant des deux entités $E_i$ et $E_j$ les ensembles $N_i$ des n-grams de $E_i$ et l'ensemble $N_j$ des n-grams de $E_j$,
   définir ensuite le nombre de n-grams $|N_i|$ déduits de $E_i$ et le nombre de n-grams $|N_j|$ déduits de $E_j$, la similarité

   entre $E_1$ et $E_j$ est alors définie par : $S_n\left(E_i, E_j\right) = \dfrac{\left|N_i \cap N_j\right|}{\min\left(\left|N_i\right|, \left|N_j\right|\right)}$ .

   • utiliser une méthode de fusion des données sur lesdites entités de la base de données afin de construire au moins 2 classifications, relatives respectivement à la similarité n-grams avec n supérieur ou égal à 2, lesdites classifications correspondant à des ensembles de classes d'entités $P_i$,
   • trouver la partition consensus $P_c$ entre les M partitions trouvées, utiliser l'entité de forme canonique $E_c$ pour visualiser le résultat ou encore modifier les entités présentes dans la base de données par l'entité de forme canonique.

2. Procédé selon la revendication 1 **caractérisé en ce que** le procédé de fusion est la méthode d'analyse relationnelle.

3. Procédé selon la revendication 2 **caractérisé en ce que** lors de l'étape de l'analyse relationnelle, le procédé pour accomplir l'étape d'analyse relationnelle pour trouver la partition consensus entre les partitions déterminées va utiliser la similarité régularisée pour pondérer différemment le poids de chaque partition, dans le calcul de la similarité globale déduite des trois partitions en exécutant les étapes suivantes :

on commence par calculer la densité $\delta_i$ de chaque partition $P_i$,

Cette densité est une mesure du pouvoir d'agrégation de la partition considérée et est définie par la relation :

$$\delta_i = \frac{\sum_{k=1}^{\kappa} n_{ik}^2}{nb\_entites^2}$$ où $\kappa$ est le nombre de classes de la partition $P_i$, $n_{ik}$ le nombre d'entités de la partition $k$

et *nb_entites* est le nombre d'entités présentes dans la base,

En notant $\Delta = \sum_{i=1}^{3} \delta_i$ , alors le poids $\Pi_i$ de la partition $P_i$ sera : $\Pi_i = 0.5 \times \left( 1 - \frac{\delta_i}{\Delta} \right)$ .

4. Procédé selon l'une des revendications 1 à 3 **caractérisé en ce qu'**il comporte une étape d'émission d'une requête d'un utilisateur pour trouver les entités canoniques dans une base de données et effectuer le remplacement desdites entités par l'entité canonique trouvée.

5. Système permettant de gérer des entités nommées se présentant sous différentes formes graphiques ou syntaxiques et référant à la même entité contenues dans une base de données dans lequel le procédé va exécuter différentes actions physiques au niveau de la base de données pour optimiser la qualité de la base de données et par suite en obtenir une meilleure gestion **caractérisé en ce qu'**il comporte au moins les éléments suivants :

   • un processeur (2) adapté à exécuter les différentes étapes du procédé selon l'une des revendications 1 à 4,
   • une base de données non structurées (3) qui peut contenir des textes,
   • une mémoire tampon (4) permettant le stockage de toutes les données dont il faut réaliser l'appariement.

6. Système selon la revendication 5 **caractérisé en ce qu'**il comporte un dispositif de prise de décision (23) suite à une requête (20) formulée par un utilisateur.

7. Système selon la revendication 5 **caractérisé en ce qu'**il comporte une interface homme machine (25) permettant l'affichage des résultats de classification du procédé selon l'une des revendications 1 à 4 et l'intervention d'un opérateur pour modifier la base de données initiale en remplaçant les entités présentes dans la base de données par l'entité de forme canonique.

FIG.1

EP 2 207 107 A1

FIG.2

Decision
Si score = 1 → Auto
Si score < 1 → Utilisateur

Modification de la Base de données

Requête — 20

FIG.3

Recherche
Des
Formes « Proches »
Méthode
d'appariement:
Résultats:
*P. Achantel
Alcantel Pierre
Etc..*

Ensemble
des classes des
Formes « Proches »
détectées

*Alchantel
P.Alcantrel
Pierre Alcantel*

*Phantel
G.Hantel
Pierre Hantel*

*Chantelle
Chantel
P.Chantels*

requête
« Pierre Alchantel »

Analyse
Visualisation
Personnes
+ Infos associées

DECISION

*Choix du meilleur représentant/ou candidat de chaque classe*

FIG.4

EP 2 207 107 A1

Europäisches
Patentamt

European
Patent Office

Office européen
des brevets

# RAPPORT DE RECHERCHE EUROPEENNE

Numéro de la demande

EP 09 18 0536

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | VERYKIOS V S ET AL: "AUTOMATING THE APPROXIMATE RECORD-MATCHING PROCESS" INFORMATION SCIENCES, AMSTERDAM, NL, vol. 126, no. 1-04, 1 juillet 2000 (2000-07-01), pages 83-98, XP008046907 ISSN: 0020-0255 | 5-6 | INV. G06F17/30 |
| A | * page 85, ligne 1 - ligne 36 * ----- | 1-4,7 | |
| A | COHEN W AND RICHMAN J: "Learning to Match and Cluster Entity Names" ACM SIGIR-2001 WORKSHOP ON MATHEMATICAL/FORMAL METHODS IN INFORMATION RETRIEVAL, [Online] 2001, XP002534153 Extrait de l'Internet: URL:http://citeseerx.ist.psu.edu/viewdoc/summary?doi=10.1.1.21.3842> [extrait le 2009-06-24] * page 1, ligne 1 - ligne 22 * ----- | 1-7 | |
| A | KOUDAS N AND SARAWAGI S AND SRIVASTAVA D: "Record linkage: similarity measures and algorithms" PROCEEDINGS OF THE 2006 ACM SIGMOD INTERNATIONAL CONFERENCE ON MANAGEMENT OF DATA, [Online] 2006, pages 802-803, XP002534154 Chicago, IL, USA Extrait de l'Internet: URL:http://portal.acm.org/citation.cfm?id=1142473.1142599> [extrait le 2009-06-24] * le document en entier * ----- -/-- | 1-7 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| Munich | 10 février 2010 | Hauck, Rainer |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons

................................................................

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 09 18 0536

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CARDIE C AND WAGSTAFF K: "Noun Phrase Coreference as Clustering" PROCEEDINGS OF THE JOINT CONFERENCE ON EMPIRICAL METHODS IN NLP AND VERY LARGE CORPORA, [Online] 1999, pages 82-89, XP002534155 Association for Computational Linguistics Extrait de l'Internet: URL:http://eprints.kfupm.edu.sa/53538/1/53 538.pdf> [extrait le 2009-06-24] * le document en entier * ----- | 1-7 | |
| A | ELFEKY M G ET AL: "TAILOR: a record linkage toolbox" PROCEEDINGS 18TH. INTERNATIONAL CONFERENCE ON DATA ENGINEERING. (ICDE'2002). SAN JOSE, CA, FEB. 26 - MARCH 1, 2002; [INTERNATIONAL CONFERENCE ON DATA ENGINEERING. (ICDE)], LOS ALAMITOS, CA : IEEE COMP. SOC, US, vol. CONF. 18, 26 février 2002 (2002-02-26), pages 17-28, XP010588196 ISBN: 978-0-7695-1531-1 * chap. 4.1.2 * ----- | 1-7 | |

DOMAINES TECHNIQUES RECHERCHES (IPC)

-/--

Le présent rapport a été établi pour toutes les revendications

| Lieu de la recherche | Date d'achèvement de la recherche | Examinateur |
|---|---|---|
| Munich | 10 février 2010 | Hauck, Rainer |

EPO FORM 1503 03.82 (P04C02)

Europäisches
Patentamt

European
Patent Office

Office européen
des brevets

# RAPPORT DE RECHERCHE EUROPEENNE

Numéro de la demande

EP 09 18 0536

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FERRÉS D AND MASSOT M AND PADRO M AND RODRIGUEZ H AND TURMO J: "Automatic Building Gazeetters of Co-referring Named Entities" PROCEEDINGS OF THE 4TH INTERNATIONAL CONFERENCE ON LANGUAGE RESOURCES AND EVALUATION (LREC), [Online] 2004, XP002534156 Lisboa, Portugal Extrait de l'Internet: URL:http://www.lsi.upc.edu/~nlp/papers/fer resetal04a.pdf> [extrait le 2009-06-24] * le document en entier * ----- | 1-7 | |
| A | AH-PINE J AND LEMOINE J AND BENHADDA H: "Un nouvel outil de classification non supervisee de documents pour la decouverte de connaissances et la detection de signaux faibles : rares text" JOURNÉE SUR LES SYSTÈMES D'INFORMATION ÉLABORÉE, [Online] 13 juillet 2005 (2005-07-13), - 17 juillet 2005 (2005-07-17) XP002534195 île Rousse Extrait de l'Internet: URL:http://isdm.univ-tln.fr/PDF/isdm22/isd m22_ahpine.pdf> [extrait le 2009-06-24] * chap. 1 & 2 * ----- | 1-7 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 10 février 2010 | Hauck, Rainer |

EPO FORM 1503 03.82 (P04C02)